(19)

Europäisches Patentamt

European Patent Office

Office européen des brevets

(11) **EP 4 276 692 A1**

(12) **EUROPEAN PATENT APPLICATION**

(43) Date of publication:
**15.11.2023 Bulletin 2023/46**

(21) Application number: **22173331.4**

(22) Date of filing: **13.05.2022**

(51) International Patent Classification (IPC):
**G06N 3/04** (2023.01)        **G06N 3/08** (2023.01)
**G06N 5/00** (2023.01)        **B25J 9/16** (2006.01)

(52) Cooperative Patent Classification (CPC):
**G06N 3/084; G06N 3/04; G06N 5/01;** B25J 9/1697;
G05B 2219/39102; G06N 3/086

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Robert Bosch GmbH**
**70442 Stuttgart (DE)**

(72) Inventor: **Metzen, Jan Hendrik**
**71034 Boeblingen (DE)**

(54) **NEURAL NETWORK LAYER FOR NON-LINEAR NORMALIZATION**

(57)    Computer-implemented machine learning system (60), wherein the machine learning system (60) is configured to provide an output signal (y) based on an input signal (x) by forwarding the input signal (x) through a plurality of layers (L, 61) of the machine learning system (60), wherein at least one of the layers (61) of the plurality of layers (L, 61) is configured to receive a layer input ($l$), which is based on the input signal (x), and to provide a layer output (o) based on which the output signal (y) is determined, wherein the layer (61) is characterized by the layer (61) being configured to determine the layer output ($l$) by means of a nonlinear normalization of the layer input ($l$).

**Fig. 1**

**Description**

Technical field

The invention concerns a computer-implemented machine learning system, a computer-implemented method for training the machine learning system, a computer-implemented method for performing inference on the machine learning system, a computer program, and a machine-readable storage medium.

Prior art

Ioffe and Szegedy "Batch Normalization: Accelerating Deep Network Training by Reducing Internal Covariate Shift", 2015, https://arxiv.org/abs/1502.03167 discloses Batch Norm (BN), a method for normalizing mini-batches during training of a neural network.

Wu and He "Group Normalization", 2018, https://arxiv.org/abs/1803.08494 discloses Group Normalization (GN) as a simple alternative to BN. GN divides the channels into groups and computes within each group the mean and variance for normalization.

Ba et al. "Layer Normalization", 2016, https://arxiv.org/abs/1607.06450 discloses a method known as layer normalization (LN), which is a transposed application of BN.

Ulyanov et al. "Instance Normalization: The Missing Ingredient for Fast Stylization", 2016, https://arxiv.org/abs/1607.08022 discloses a normalization method known as instance normalization (IN).

Technical background

Deep neural networks serve as backbone for many technical applications in various technical fields. Especially when automatically analyzing environments or internal states of machines such as automated manufacturing machines or robots Different normalization layers for deep neural networks have been proposed. One of the main benefits of such normalization techniques is that training is stabilized because forward flow of signal and backward flow of gradient are normalized and vanishing/exploding gradient issues are mitigated.

This is achieved by linearly mapping a subset of values from an input of such a normalization layer such that after mapping the values of the subset have a predefined mean (typically 0) and a predefined variance (typically 1).

However, the inventors found that the linear nature of known normalization methods restrict the effectiveness of normalization. The inventors found this to be the case as known normalization techniques use non-robust estimators of central tendency (mean) and dispersion (variance/standard deviation), which can be heavily affected by outliers.

The invention hence proposes a non-linear normalization method, which uses more robust percentile estimators internally that are not strongly affected by single outliers. Advantageously, the proposed approach can deal better with domain shifts that introduce skewed, heavy-tail distributions of values of an input of a normalization layer or multi-modal distributions of values of an input of a normalization layer. Consequently, the proposed approach allows for an increased performance of a machine learning system employing the proposed normalization technique.

Disclosure of the invention

In a first aspect, the invention concerns a computer-implemented machine learning system, wherein the machine learning system is configured to provide an output signal based on an input signal by forwarding the input signal through a plurality of layers of the machine learning system, wherein at least one of the layers of the plurality of layers is configured to receive a layer input, which is based on the input signal, and to provide a layer output based on which the output signal is determined, wherein the layer is characterized by the layer being configured to determine the layer output by means of a non-linear normalization of the layer input.

Preferably, the machine learning system may be a neural network wherein the layer is a normalization layer of the neural network. However, the layer can be used in any machine learning system comprising layers, i.e., encapsulated modules which accept inputs and provide outputs. For example, the machine learning system could comprise a stack of support vector machines (SVM), wherein each SVM is considered a layer and the layer referred to above can be inserted in between the stacked SVMs.

The input signal to the machine learning system is forwarded through the layers of the machine learning system in order to determine the output signal. This may be understood as the input signal being provided to a first layer of the machine learning system, wherein the first layer determines a layer output depending on the input signals. The layer output may then be forwarded to another layer or a plurality of layers, wherein the layer output determined from the first layer serves as input to the other layer or the plurality of layers. This way, each layer in the machine learning system can be understood to receive a layer input that is determined based in the input signal and provides a layer output. A layer output of a final layer of the machine learning system may then be provided as output signal.

The layer is characterized by the fact that it performs a non-linear normalization operation. This may especially be understood as the layer accepting a layer input of an arbitrary shape (e.g., a vector, a matrix, or a tensor) and normalizing each element of the input, thereby determining a layer output of the same shape as the layer input. However, the values of elements in the layer output are normalized in comparison with the values of elements in the layer input.

The input signal may especially characterize sensor signals and/or an internal state of a technical system. For example, the machine learning system may be used as part of an autonomous or at least partially automated system that is configured to perceive elements of its environment by means of sensors. Alternatively or additionally, the input signal may characterize internal information about the technical system, e.g., a temperature, an electrical current or voltage, a linear or angular speed, and/or an amount of fluid or gas passing through a pipe or nozzle. The input signal may hence characterize sensor data. That is, the input signal may a sensor signal from a sensor or may comprise a plurality of sensor signals from sensors of the same type and/or sensors of different types. The sensor or the sensors may, for example, be a camera, a lidar sensor, a radar sensor, an ultrasonic sensor, a thermal camera, a microphone, a piezo sensor

The machine learning system is configured to infer information encoded in the input signal. The machine learning system may, for example, analyze the input signal, e.g., perform a classification of the input signal and/or perform a regression analysis based on the input signal. Alternatively or additionally, the machine learning system may be configured to determine a likelihood of a supplied input signal with respect to a dataset of training input signals (e.g., the machine learning system may be a normalizing flow). The machine learning system may also be configured to generate data. For example, the output signal may characterize an image generated based on another image used as input signal. The output signal may also characterize an audio signal, e.g., an audio signal characterizing an auditive description of a scene of an image provided as input signal.

Advantageously, the layer is capable of performing a non-linear normalization. That is, the values of elements of the layer output are obtained by means of a non-linear function based on the elements of the layer input. This is advantageous as the values of elements of the layer input typically follow a multi-modal and/or a skewed and/or heavy-tailed distribution. The inventors found that especially for corrupted input signals the proposed method is able to achieve a better performance, especially for corruptions known as common corruptions in standard benchmarks such as CIFAR-10C.

Preferably, for determining the layer output the layer is configured to normalize at least one group of values of the layer input, wherein the group comprises all values of the layer input or a subset of the values of the layer input.

The layer input may especially be split into groups as is done in Group Normalization. In particular, the layer input may be a tensor comprising at least a batch axis, a channel axis, and a spatial axis. The tensor may then be split into groups, wherein each group comprises elements of one element along the batch axis, multiple elements along the channel axis, and all elements of the spatial axis. Preferably, each group comprises the same amount of elements.

The non-linear normalization is, however, agnostic to the actual size and amount of the groups. That is, the layer input may be normalized as a whole. This can be considered as only using a single group. Preferably, however, the layer input is split into a plurality of groups, wherein each group is normalized individually based on the values of the elements of the respective group. The actual amount of groups the layer input shall be split into can be considered a hyperparameter of the machine learning system. For the sake of simplicity, using all elements of the layer input for normalization will also be considered performing normalization on a group of elements, albeit there only being a single group to be processed.

The authors found that splitting the layer input into a plurality of groups leads to a better performance of the machine learning system compared to using only a single group.

In preferred embodiments the non-linear normalization is characterized by mapping empirical percentiles of values from the group to percentiles of a predefined probability distribution.

This may be understood as the values of a group being considered to be random values drawn from some probability distribution. The goal is to map the values to normalized values such that a density of the normalized values (i.e., the values provided in the layer output) is as close as possible to a density of the predefined probability distribution. This way, even if the values of the group follow some multi-modal, skewed, and/or heavy-tailed distribution, the mapping is still able to normalize the values to the density of the predefined probability distribution.

The type of predefined probability distribution (e.g., normal distribution, standard t-distribution, Laplacian distribution) can also be considered a hyperparameter of the method.

In preferred embodiments the predefined probability distribution is a standard normal distribution. Advantageously, the inventors found this distribution to increase the performance against corruptions even further.

The machine learning system may preferably be configured to perform the following steps in order to conduct the mapping:

- Receiving a group of values of the layer input;

- Sorting the received values;
- Computing percentile values for each position of the sorted values;
- Computing interpolation targets by means of a quantile function of the predefined probability distribution;
- Determine a function characterizing a linear interpolation of the sorted values and the interpolation targets;
- Determine the layer output by processing the received values with the function.

Receiving a group of values may simply be understood as receiving a group of values to be normalized. The received values (i.e., the values in the group) may then be sorted in ascending order, wherein for each position in the sorted values a percentile value may be determined. The percentile value $P_i$ at an index i of the plurality of sorted values may preferably be determined according to the function

$$P_i = expit\left(logit\left(\frac{1}{N}\right) + \frac{i-1}{N}logit\left(1 - \frac{1}{N}\right)\right),$$

$$logit(p) = \ln\left(\frac{p}{1-p}\right),$$

$$expit(p) = \frac{\exp(p)}{1 + \exp(p)},$$

wherein $N$ is the amount of values received (i.e., the amount of values in the group).

In a next step, the determined percentile values may be input into a percent-point-function or quantile function of the predefined probability distribution in order to determine interpolation targets. For example, if the predefined probability distribution is a standard normal distribution the probit function is used as quantile function.

The sorted values and the determined interpolation targets may then be used in order to determine the function. A value at its position in the sorted values and an interpolation target determined based on the percentile value at the position may be understood as a mapping tuple, i.e., the mapping performed by the function should give the interpolation target as result when inputting the value. As there only exist a discrete set of such tuples, a 1-dimensional piecewise linear interpolant may preferably be determined based on the tuples and provided as function. The received values may then be processed by the interpolant in order to determine normalized values that can then be provided in the layer output.

The steps may preferably be conducted for each group the layer input is split into.

In further preferred embodiments, determining the layer output comprises an additional step of smoothing the sorted values by means of a smoothing operation. The smoothed values may then be used in the tuples for determining the linear interpolation.

The smoothing operation may, for example, be characterized by a smoothing filter slid over the sorted values. For example, the smoothing operation may be a Gaussian filter.

The inventors found that smoothing the sorted values leads to a reduction of noise when determining percentiles of the empirical distribution of values. This leads to an even better performance of the machine learning system.

In preferred embodiments, the step of determining the layer output further comprises a step of scaling and/or shifting the values obtained after processing the received values with the function.

By scaling and/or shifting the values the machine learning system is able to adapt the layer output such that the expected value and variance of values of the layer output are in a suitable range for layers using the layer output as layer input. The scaling factor and/or bias used in shifting may especially be trainable parameters of the machine learning system.

In another aspect, the invention concerns a computer-implemented method for training the machine learning system according to any one of the embodiments presented above.

As the operations for determining the layer output based on the layer input are differentiable, standard methods such as gradient descent based on gradients determined by backpropagation can be used for training the machine learning system. In any case, gradient free-optimization methods such as evolutionary algorithms may be used also.

In another aspect, the invention concerns a computer-implemented method for determining an output signal based on an input signal, wherein the output signal is determined by providing the input signal to the machine learning system according to any one of the embodiments presented above.

The input signal and output signal in this method can also be of a form as previously discussed for the machine learning system.

Embodiments of the invention will be discussed with reference to the following figures in more detail. The figures show:

Figure 1       a machine learning system;

Figure 2       a control system comprising the machine learning system controlling an actuator in its environment;

Figure 3       the control system controlling an at least partially autonomous robot;

Figure 4       the control system controlling a manufacturing machine;

Figure 5       the control system controlling an automated personal assistant;

Figure 6       the control system controlling an access control system;

Figure 7       the control system controlling a surveillance system;

Figure 8       the control system controlling an imaging system;

Figure 9       the control system controlling a medical analysis system;

Figure 10      a training system for training the classifier.

Description of the embodiments

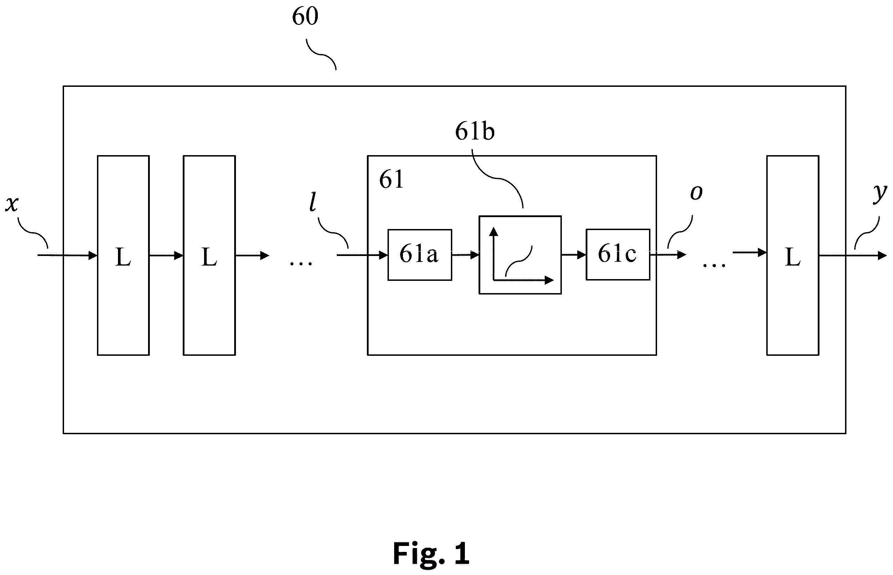

Figure 1 shows an embodiment of a machine learning system (60). In the embodiment the machine learning system (60) may be a feedforward neural network, e.g., a multi-layer perceptron, a convolutional neural network, a transformer, a visual transformer, or a vision transformer. The machine learning system (60) is provided an input signal (x), which is processed by a plurality of layers (L, 61) of the machine learning system (60).

At least one layer (61) of the layers (L, 61) of the machine learning system (60) is configured to determine a non-linear normalization as layer output (o) of the layer (61) based on a layer input ($l$) of the layer (61). The layer (61) may preferably comprise a split unit (61a), which receives the layer input ($l$) and splits the layer input ($l$) into a predefined amount of groups, wherein the amount of groups is a hyperparameter of the machine learning system (60). Alternatively, the layer input ($l$) may also be used as a whole in the sense of a single group.

An ensuing percentile unit (61b) then determines an empirical percentile value for each value of a group. The percentile unit (61b) achieves this by first sorting the values of the group in ascending order. Preferably, the percentile unit (61b) then smoothes the sorted values by means of a smoothing operation, preferably a gaussian filter. Whether smoothed or not, the percentile unit (61b) then determines percentile values for each position, i.e., index, of the list of sorted values. The percentile value $P_i$ at an index i of the list of sorted values may preferably be determined according to the function

$$P_i = expit \left( logit \left( \frac{1}{N} \right) + \frac{i-1}{N} logit \left( 1 - \frac{1}{N} \right) \right),$$

$$logit(p) = \ln \left( \frac{p}{1-p} \right),$$

$$expit(p) = \frac{\exp(p)}{1 + \exp(p)},$$

wherein $N$ is the amount of values in the group. In addition, the percentile unit (61b) determines interpolation targets $Y_i$ by providing each $P_i$ to a quantile function of a predefined probability distribution. Preferably, the predefined probability distribution is a standard normal distribution, and the quantile function is a probit function. There hence exist $N$ percentile values $P_i$ and $N$ interpolation targets $Y_i$, wherein there exists one interpolation target per percentile value

The values of the group, the determined percentile values and the interpolation targets are then forwarded to an interpolation unit (61c). The interpolation unit (61c) then determines $N$ indices $s_i$ according to the formula:

$$s_i = \lfloor P_i \cdot N \rfloor,$$

sets the first index $s_1 = 1$ and the last index $s_N = N$. In addition, the interpolation unit (61c) determines a list of $N$ further indices $t_i$, wherein $t_i = i$. There hence exist two lists of indices s and $t$, wherein elements $s_i$ and $t_i$ are considered to correspond. Then, the interpolation unit removes all duplicate indices from s and also removes values from $t$ that correspond to indices removed from s. After removal, the lists s and $t$ are of a new size $K$.

Based on the lists s and k a set of tuples

$$\left\{ \left( X_{s_1}, Y_{t_1} \right), \left( X_{s_2}, Y_{t_2} \right), \dots, \left( X_{s_K}, Y_{t_K} \right) \right\}$$

is then formed, wherein $X_i$ is the value of the sorted value at position i. Based on the tuples, a 1-dimensional linear interpolant is then determined. The values of the group are then processed by the interpolant to determine the layer output (o) if only one group was used for the layer input (*l*) or to determine a part of the layer output (o) if the layer input (*l*) was split in a plurality of groups. If the layer input (*l*) was split into a plurality of groups, the described procedure is preferably conducted for each group to normalize each group. The determined results are then combined and provided as layer output (o). The combination is preferably conducted such that the layer output (o) is of a same shape as the layer input (*l*).

Preferably, the machine learning system (60) comprises a plurality of normalization layers (61). The normalization layer (61) or the normalization layers may be located at any position in the machine learning system (60), e.g., the normalization layer (61) may be an input layer of the machine learning system (60), an output layer of the machine learning system (60), or a hidden layer of the machine learning system (60).

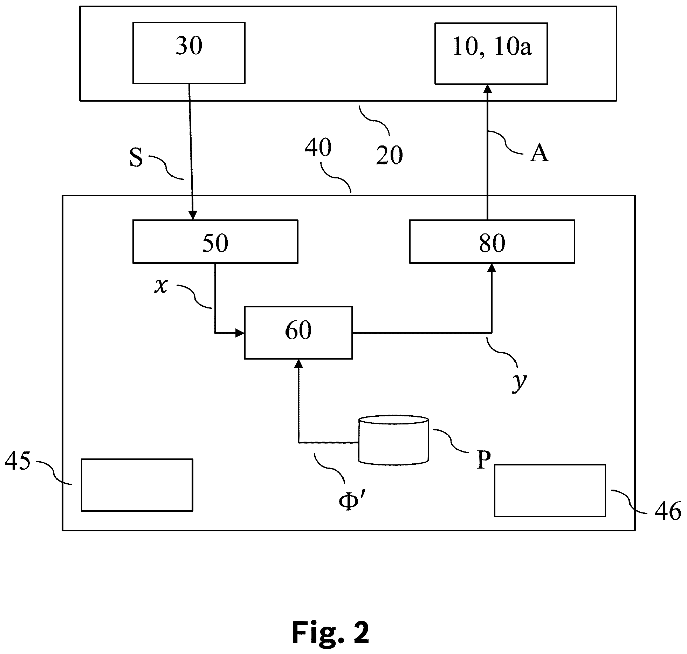

Figure 2 shows an embodiment of an actuator (10) in its environment (20). The actuator (10) interacts with a control system (40) comprising the machine learning system (60). The actuator (10) and its environment (20) will be jointly called actuator system. At preferably evenly spaced points in time, a sensor (30) senses a condition of the actuator system. The sensor (30) may comprise several sensors. Preferably, the sensor (30) is an optical sensor that takes images of the environment (20). An output signal (S) of the sensor (30) (or in case the sensor (30) comprises a plurality of sensors, an output signal (S) for each of the sensors) which encodes the sensed condition is transmitted to the control system (40).

Thereby, the control system (40) receives a stream of sensor signals (S). It then computes a series of control signals (A) depending on the stream of sensor signals (S), which are then transmitted to the actuator (10).

The control system (40) receives the stream of sensor signals (S) of the sensor (30) in an optional receiving unit (50). The receiving unit (50) transforms the sensor signals (S) into input signals (x). Alternatively, in case of no receiving unit (50), each sensor signal (S) may directly be taken as an input signal (x). The input signal (x) may, for example, be given as an excerpt from the sensor signal (S). Alternatively, the sensor signal (S) may be processed to yield the input signal *(x).* In other words, the input signal (x) is provided in accordance with the sensor signal (S).

The input signal (x) is then passed on to the machine learning system (60).

The machine learning system (60) is parametrized by parameters ($\Phi$), which are stored in and provided by a parameter storage ($St_1$).

The machine learning system (60) determines an output signal (y) from the input signals (x). The output signal (y) comprises information that assigns one or more labels to the input signal (x). The output signal (y) is transmitted to an optional conversion unit (80), which converts the output signal (y) into the control signals (A). The control signals (A) are then transmitted to the actuator (10) for controlling the actuator (10) accordingly. Alternatively, the output signal (y) may directly be taken as control signal (A).

The actuator (10) receives control signals (A), is controlled accordingly, and carries out an action corresponding to the control signal (A). The actuator (10) may comprise a control logic which transforms the control signal (A) into a further control signal, which is then used to control actuator (10).

In further embodiments, the control system (40) may comprise the sensor (30). In even further embodiments, the control system (40) alternatively or additionally may comprise an actuator (10).

In still further embodiments, it can be envisioned that the control system (40) controls a display (10a) instead of or in addition to the actuator (10).

Furthermore, the control system (40) may comprise at least one processor (45) and at least one machine-readable storage medium (46) on which instructions are stored which, if carried out, cause the control system (40) to carry out a method according to an aspect of the invention.

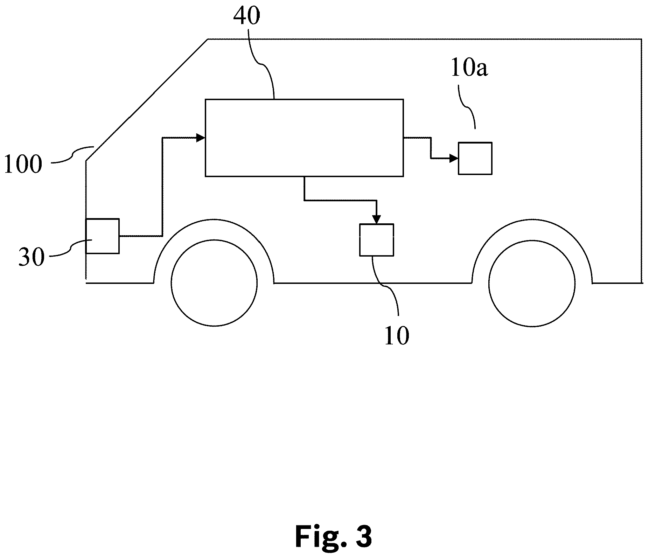

Figure 3 shows an embodiment in which the control system (40) is used to control an at least partially autonomous robot, e.g., an at least partially autonomous vehicle (100).

The sensor (30) may comprise one or more video sensors and/or one or more radar sensors and/or one or more ultrasonic sensors and/or one or more LiDAR sensors. Some or all of these sensors are preferably but not necessarily integrated in the vehicle (100). The input signal (x) may hence be understood as an input image and the machine learning system (60) as an image classifier.

The image classifier (60) may be configured to detect objects in the vicinity of the at least partially autonomous robot based on the input image (x). The output signal (y) may comprise an information, which characterizes where objects are located in the vicinity of the at least partially autonomous robot. The control signal (A) may then be determined in accordance with this information, for example to avoid collisions with the detected objects.

The actuator (10), which is preferably integrated in the vehicle (100), may be given by a brake, a propulsion system, an engine, a drivetrain, or a steering of the vehicle (100). The control signal (A) may be determined such that the actuator (10) is controlled such that vehicle (100) avoids collisions with the detected objects. The detected objects may also be classified according to what the image classifier (60) deems them most likely to be, e.g., pedestrians or trees, and the control signal (A) may be determined depending on the classification.

Alternatively or additionally, the control signal (A) may also be used to control the display (10a), e.g., for displaying the objects detected by the image classifier (60). It can also be imagined that the control signal (A) may control the display (10a) such that it produces a warning signal if the vehicle (100) is close to colliding with at least one of the detected objects. The warning signal may be a warning sound and/or a haptic signal, e.g., a vibration of a steering wheel of the vehicle.

In further embodiments, the at least partially autonomous robot may be given by another mobile robot (not shown), which may, for example, move by flying, swimming, diving, or stepping. The mobile robot may, inter alia, be an at least partially autonomous lawn mower, or an at least partially autonomous cleaning robot. In all of the above embodiments, the control signal (A) may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, a control signal (A) may be determined to cause the actuator (10) to spray the plants with a suitable quantity of suitable liquids and/or cut the plants.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal (A) may then be determined depending on a detected material of the laundry.

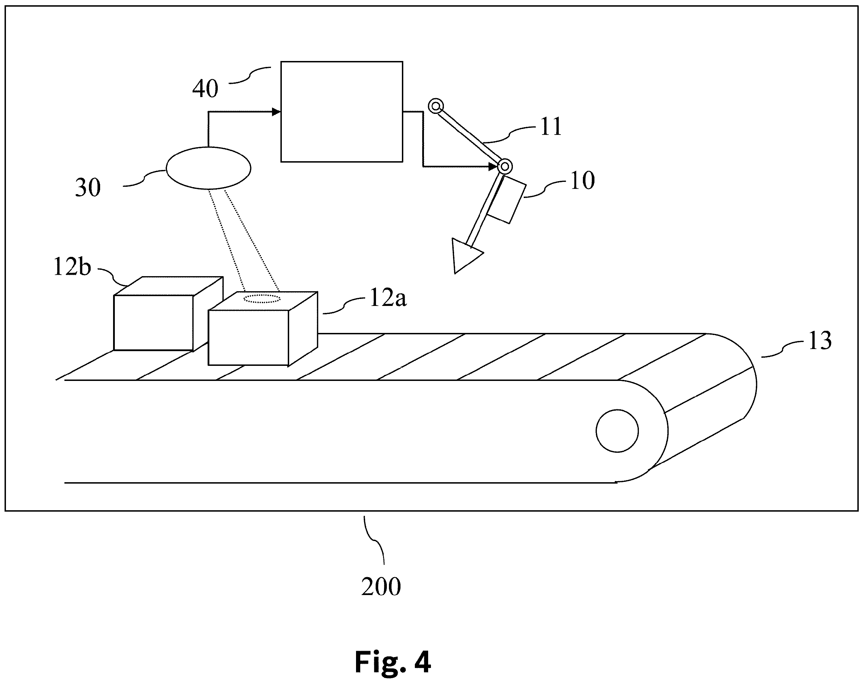

Figure 4 shows an embodiment in which the control system (40) is used to control a manufacturing machine (11), e.g., a punch cutter, a cutter, a gun drill or a gripper, of a manufacturing system (200), e.g., as part of a production line. The manufacturing machine may comprise a transportation device, e.g., a conveyer belt or an assembly line, which moves a manufactured product (12). The control system (40) controls an actuator (10), which in turn controls the manufacturing machine (11).

The sensor (30) may be given by an optical sensor which captures properties of, e.g., a manufactured product (12). The machine learning system (60) may hence be understood as an image classifier.

The image classifier (60) may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut the manufactured product at a specific location of the manufactured product itself. Alternatively, it may be envisioned that the image classifier (60) classifies, whether the manufactured product is broken or exhibits a defect. The actuator (10) may then be controlled as to remove the manufactured product from the transportation device.

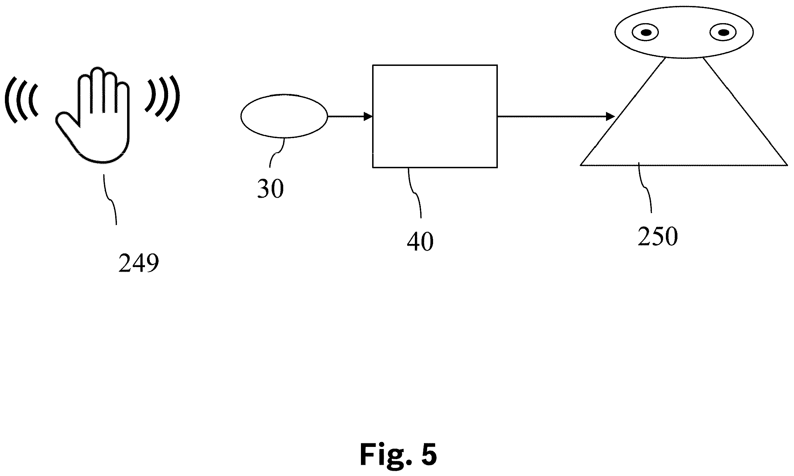

Figure 5 shows an embodiment in which the control system (40) is used for controlling an automated personal assistant (250). The sensor (30) may be an optic sensor, e.g., for receiving video images of a gestures of a user (249). Alternatively, the sensor (30) may also be an audio sensor, e.g., for receiving a voice command of the user (249).

The control system (40) then determines control signals (A) for controlling the automated personal assistant (250). The control signals (A) are determined in accordance with the sensor signal (S) of the sensor (30). The sensor signal (S) is transmitted to the control system (40). For example, the machine learning system (60) may be configured to, e.g., carry out a gesture recognition algorithm to identify a gesture made by the user (249). The control system (40) may then determine a control signal (A) for transmission to the automated personal assistant (250). It then transmits the control signal (A) to the automated personal assistant (250).

For example, the control signal (A) may be determined in accordance with the identified user gesture recognized by the machine learning system (60). It may comprise information that causes the automated personal assistant (250) to retrieve information from a database and output this retrieved information in a form suitable for reception by the user (249).

In further embodiments, it may be envisioned that instead of the automated personal assistant (250), the control system (40) controls a domestic appliance (not shown) controlled in accordance with the identified user gesture. The domestic appliance may be a washing machine, a stove, an oven, a microwave, or a dishwasher.

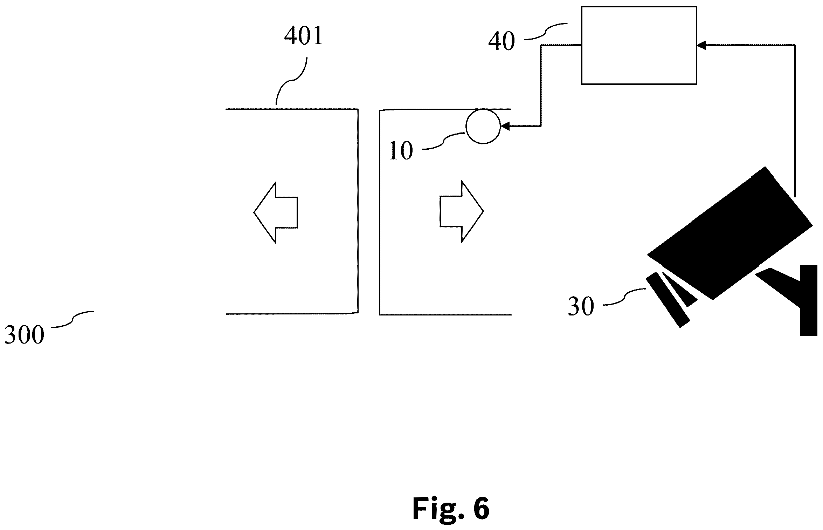

Figure 6 shows an embodiment in which the control system (40) controls an access control system (300). The access control system (300) may be designed to physically control access. It may, for example, comprise a door (401). The sensor (30) can be configured to detect a scene that is relevant for deciding whether access is to be granted or not. It may, for example, be an optical sensor for providing image or video data, e.g., for detecting a person's face. The machine learning system (60) may hence be understood as an image classifier.

The image classifier (60) may be configured to classify an identity of the person, e.g., by matching the detected face of the person with other faces of known persons stored in a database, thereby determining an identity of the person. The control signal (A) may then be determined depending on the classification of the image classifier (60), e.g., in accordance with the determined identity. The actuator (10) may be a lock which opens or closes the door depending on the control signal (A). Alternatively, the access control system (300) may be a non-physical, logical access control system. In this case, the control signal may be used to control the display (10a) to show information about the person's identity and/or whether the person is to be given access.

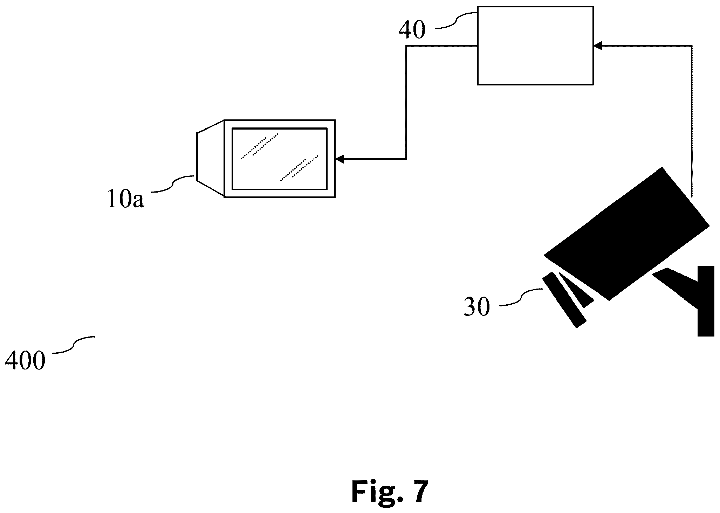

Figure 7 shows an embodiment in which the control system (40) controls a surveillance system (400). This embodiment is largely identical to the embodiment shown in figure 6. Therefore, only the differing aspects will be described in detail. The sensor (30) is configured to detect a scene that is under surveillance. The control system (40) does not necessarily need to control an actuator (10) but may alternatively control a display (10a). For example, the image classifier (60) may determine a classification of a scene, e.g., whether the scene detected by an optical sensor (30) is normal or whether the scene exhibits an anomaly. The control signal (A), which is transmitted to the display (10a), may then, for example, be configured to cause the display (10a) to adjust the displayed content dependent on the determined classification, e.g., to highlight an object that is deemed anomalous by the image classifier (60).

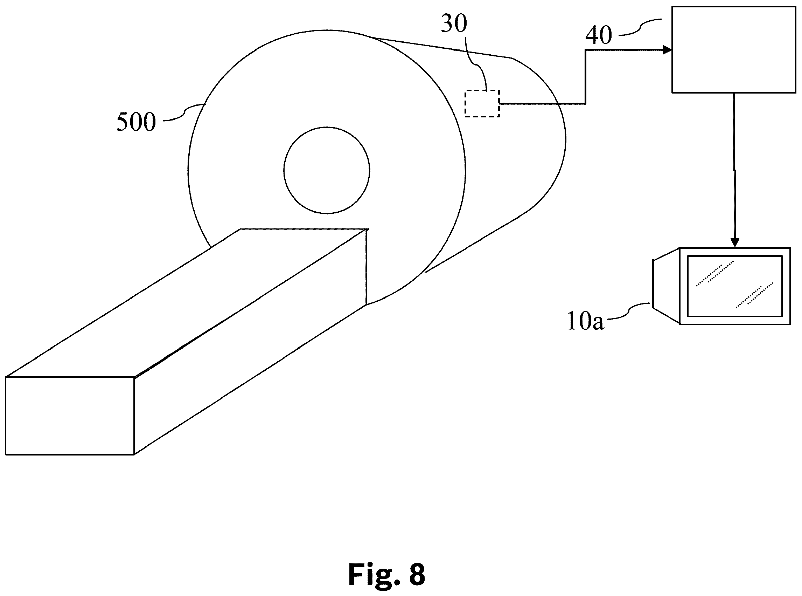

Figure 8 shows an embodiment of a medical imaging system (500) controlled by the control system (40). The imaging system may, for example, be an MRI apparatus, x-ray imaging apparatus or ultrasonic imaging apparatus. The sensor (30) may, for example, be an imaging sensor which takes at least one image of a patient, e.g., displaying different types of body tissue of the patient.

The machine learning system (60) may then determine a classification of at least a part of the sensed image. The at least part of the image is hence used as input image (x) to the machine learning system (60). The machine learning system (60) may hence be understood as an image classifier.

The control signal (A) may then be chosen in accordance with the classification, thereby controlling a display (10a). For example, the image classifier (60) may be configured to detect different types of tissue in the sensed image, e.g., by classifying the tissue displayed in the image into either malignant or benign tissue. This may be done by means of a semantic segmentation of the input image (x) by the image classifier (60). The control signal (A) may then be determined to cause the display (10a) to display different tissues, e.g., by displaying the input image (x) and coloring different regions of identical tissue types in a same color.

In further embodiments (not shown) the imaging system (500) may be used for non-medical purposes, e.g., to determine material properties of a workpiece. In these embodiments, the image classifier (60) may be configured to receive an input image (x) of at least a part of the workpiece and perform a semantic segmentation of the input image (x), thereby classifying the material properties of the workpiece. The control signal (A) may then be determined to cause the display (10a) to display the input image (x) as well as information about the detected material properties.

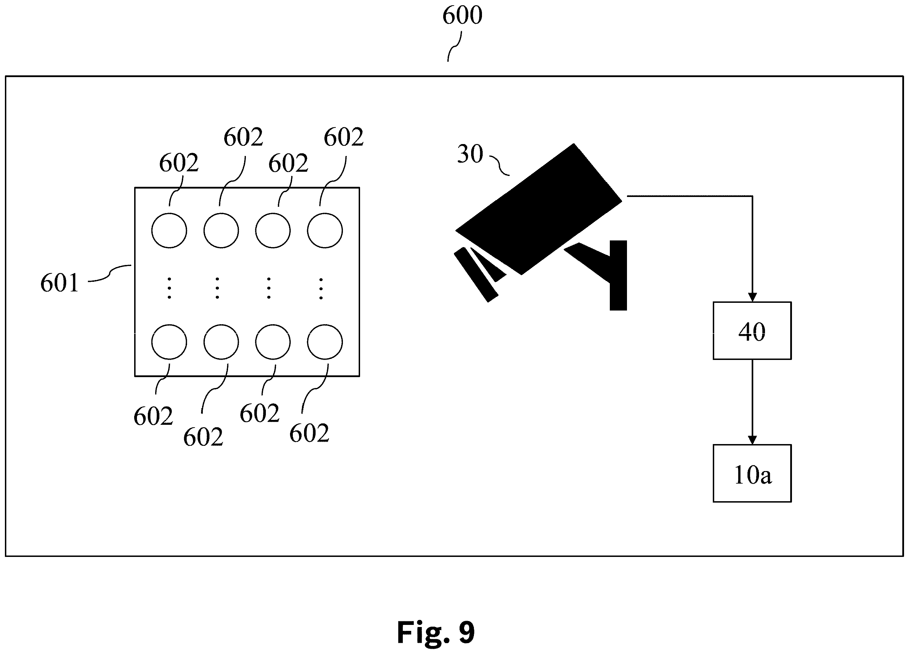

Figure 9 shows an embodiment of a medical analysis system (600) being controlled by the control system (40). The medical analysis system (600) is supplied with a microarray (601), wherein the microarray comprises a plurality of spots (602, also known as features) which have been exposed to a medical specimen. The medical specimen may, for example, be a human specimen or an animal specimen, e.g., obtained from a swab.

The microarray (601) may be a DNA microarray or a protein microarray.

The sensor (30) is configured to sense the microarray (601). The sensor (30) is preferably an optical sensor such as a video sensor. The machine learning system (60) may hence be understood as an image classifier.

The image classifier (60) is configured to classify a result of the specimen based on an input image (x) of the microarray supplied by the sensor (30). In particular, the image classifier (60) may be configured to determine whether the microarray (601) indicates the presence of a virus in the specimen.

The control signal (A) may then be chosen such that the display (10a) shows the result of the classification.

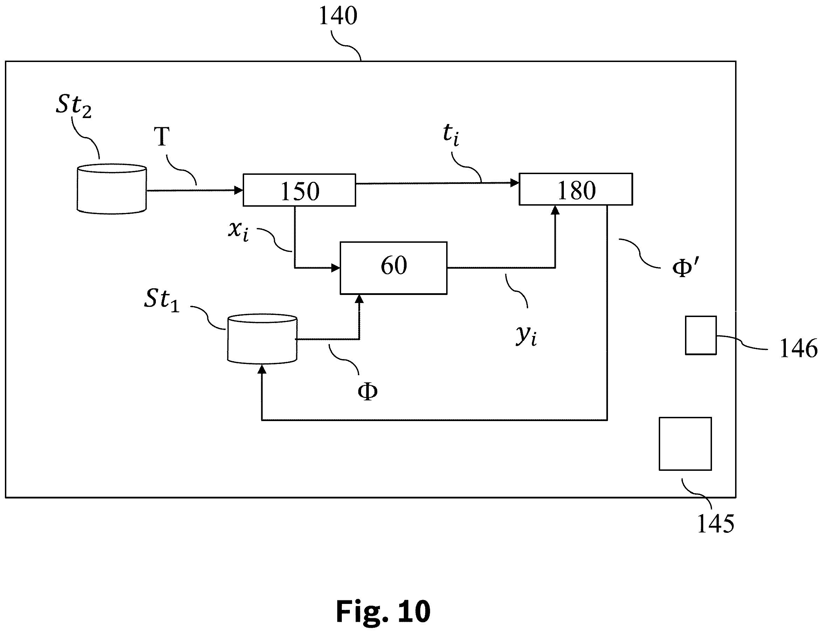

Figure 10 shows an embodiment of a training system (140) for training the machine learning system (60) of the control system (40) by means of a training data set (T). The training data set (T) comprises a plurality of input signals $(x_i)$ which are used for training the machine learning system (60), wherein the training data set (T) further comprises, for each input signal $(x_i)$, a desired output signal $(t_i)$ which corresponds to the input signal $(x_i)$ and characterizes a classification of the input signal $(x_i)$.

For training, a training data unit (150) accesses a computer-implemented database $(St_2)$, the database $(St_2)$

providing the training data set (T). The training data unit (150) determines from the training data set (T) preferably randomly at least one input signal ($x_i$) and the desired output signal ($t_i$) corresponding to the input signal ($x_i$) and transmits the input signal ($x_i$) to the machine learning system (60). The machine learning system (60) determines an output signal ($y_i$) based on the input signal ($x_i$).

The desired output signal ($t_i$) and the determined output signal ($y_i$) are transmitted to a modification unit (180).

Based on the desired output signal ($t_i$) and the determined output signal ($y_i$), the modification unit (180) then determines new parameters ($\Phi'$) for the machine learning system (60). For this purpose, the modification unit (180) compares the desired output signal ($t_i$) and the determined output signal ($y_i$) using a loss function. The loss function determines a first loss value that characterizes how far the determined output signal ($y_i$) deviates from the desired output signal ($t_i$). In the given embodiment, a negative log-likelihood function is used as the loss function. Other loss functions are also conceivable in alternative embodiments.

Furthermore, it is conceivable that the determined output signal ($y_i$) and the desired output signal ($t_i$) each comprise a plurality of sub-signals, for example in the form of tensors, wherein a sub-signal of the desired output signal ($t_i$) corresponds to a sub-signal of the determined output signal ($y_i$). It is conceivable, for example, that the machine learning system (60) is configured for object detection and a first sub-signal characterizes a probability of occurrence of an object with respect to a part of the input signal ($x_i$) and a second sub-signal characterizes the exact position of the object. If the determined output signal ($y_i$) and the desired output signal ($t_i$) comprise a plurality of corresponding sub-signals, a second loss value is preferably determined for each corresponding sub-signal by means of a suitable loss function and the determined second loss values are suitably combined to form the first loss value, for example by means of a weighted sum.

The modification unit (180) determines the new parameters ($\Phi'$) based on the first loss value. In the given embodiment, this is done using a gradient descent method, preferably stochastic gradient descent, Adam, or AdamW. In further embodiments, training may also be based on an evolutionary algorithm or a second-order method for training neural networks.

In other preferred embodiments, the described training is repeated iteratively for a predefined number of iteration steps or repeated iteratively until the first loss value falls below a predefined threshold value. Alternatively or additionally, it is also conceivable that the training is terminated when an average first loss value with respect to a test or validation data set falls below a predefined threshold value. In at least one of the iterations the new parameters ($\Phi'$) determined in a previous iteration are used as parameters ($\Phi$) of the machine learning system (60).

Furthermore, the training system (140) may comprise at least one processor (145) and at least one machine-readable storage medium (146) containing instructions which, when executed by the processor (145), cause the training system (140) to execute a training method according to one of the aspects of the invention.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

**Claims**

1. Computer-implemented machine learning system (60), wherein the machine learning system (60) is configured to provide an output signal (y) based on an input signal (x) by forwarding the input signal (x) through a plurality of layers (L, 61) of the machine learning system (60), wherein at least one of the layers (61) of the plurality of layers (L, 61) is configured to receive a layer input ($l$), which is based on the input signal (x), and to provide a layer output (o) based on which the output signal (y) is determined, wherein the layer (61) is **characterized by** the layer (61) being configured to determine the layer output ($l$) by means of a non-linear normalization of the layer input ($l$).

2. Machine learning system (60) according to claim 1, wherein for determining the layer output the layer is configured to normalize at least one group of values of the layer input ($l$), wherein the group comprises all values of the layer input ($l$) or a subset of the values of the layer input ($l$).

3. Machine learning system (60) according to claim 2, wherein the non-linear normalization is **characterized by** mapping empirical percentiles of values from the group to percentiles of a predefined probability distribution.

4. Machine learning system (60) according to claim 3, wherein the predefined probability distribution is a standard normal distribution.

5. Machine learning system (60) according claim 3 or 4, wherein determining the layer output (o) comprises the steps of:

   • Receiving a group of values of the layer input ($I$);
   • Sorting the received values;
   • Computing percentile values for each position of the sorted values;
   • Computing interpolation targets by means of a quantile function of the predefined probability distribution;
   • Determine a function characterizing a linear interpolation of the sorted values and the interpolation targets;
   • Determine the layer output (o) by processing the received values with the function.

6. Machine learning system (60) according to claim 5, wherein before determining the function, determining the layer output (o) comprises an additional step of smoothing the sorted values by means of a smoothing operation.

7. Machine learning system (60) according to claim 5 or 6, wherein the step of determining the layer output (o) further comprises a step of scaling and/or shifting the values obtained after processing the received values with the function.

8. Machine learning system (60) according to any one of the claims 1 to 7, wherein the input signal (x) characterizes a signal obtained from a sensor (30).

9. Computer-implemented method for training a machine learning system (60) according to any one of the claims 1 to 8.

10. Computer-implemented method for determining an output signal (y) based on an input signal (x), wherein the output signal (y) is determined by providing the input signal (y) to the machine learning system (60) according to any one of the claims 1 to 8.

11. Training system (140), which is configured to carry out the training method according to claim 9.

12. Computer program that is configured to cause a computer to carry out the method according to claim 9 or 10 with all of its steps if the computer program is carried out by a processor (45, 145).

13. Machine-readable storage medium (46, 146) on which the computer program according to claim 12 is stored.

**Fig. 1**

**Fig. 2**

EP 4 276 692 A1

**Fig. 3**

**Fig. 4**

249

40

30

250

**Fig. 5**

**Fig. 6**

40

10a

30

400

**Fig. 7**

**Fig. 8**

EP 4 276 692 A1

**Fig. 9**

**Fig. 10**

Europäisches
Patentamt
European
Patent Office
Office européen
des brevets

# EUROPEAN SEARCH REPORT

**Application Number**

**EP 22 17 3331**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIM DAEHYON: "Nonlinear Normalization Model to Improve the Performance of Neural Networks", ASIA-PACIFIC JOURNAL OF CONVERGENT RESEARCH INTERCHANGE, [Online] vol. 61116, no. 30, 30 November 2020 (2020-11-30), pages 183-192, XP055976734, DOI: 10.47116/apjcri.2020.11.16 Retrieved from the Internet: URL:http://fucos.or.kr/journal/APJCRI/Articles/v6n11/16.pdf> [retrieved on 2022-11-01] * page 183 – page 191 * ----- | 1-13 | INV. G06N3/04 G06N3/08 G06N5/00 ADD. B25J9/16 |
| A | US 2021/201115 A1 (LASZLO SARAH ANN [US] ET AL) 1 July 2021 (2021-07-01) * paragraphs [0197] – [0199]; figures 7,13,15 * ----- | 1-13 | |
| A | US 2021/158088 A1 (SHAO WENQI [CN] ET AL) 27 May 2021 (2021-05-27) * paragraphs [0002], [0004], [0018] * ----- | 1-13 | TECHNICAL FIELDS SEARCHED (IPC) G06N B25J |
| A | CN 113 627 356 A (SHANGHAI RADIO EQUIPMENT INST) 9 November 2021 (2021-11-09) * the whole document * ----- | 1-13 | |

The present search report has been drawn up for all claims

| Place of search | Date of completion of the search | Examiner |
|---|---|---|
| The Hague | 1 November 2022 | Manfrin, Max |

EPO FORM 1503 03.82 (P04C01)

## ANNEX TO THE EUROPEAN SEARCH REPORT
## ON EUROPEAN PATENT APPLICATION NO.

EP 22 17 3331

This annex lists the patent family members relating to the patent documents cited in the above-mentioned European search report.
The members are as contained in the European Patent Office EDP file on
The European Patent Office is in no way liable for these particulars which are merely given for the purpose of information.

01-11-2022

| Patent document cited in search report | | Publication date | Patent family member(s) | | Publication date |
|---|---|---|---|---|---|
| US 2021201115 | A1 | 01-07-2021 | US | 2021201115 A1 | 01-07-2021 |
| | | | WO | 2021138091 A1 | 08-07-2021 |
| US 2021158088 | A1 | 27-05-2021 | CN | 109784420 A | 21-05-2019 |
| | | | JP | 7076648 B2 | 27-05-2022 |
| | | | JP | 2022500798 A | 04-01-2022 |
| | | | SG | 11202102380T A | 29-04-2021 |
| | | | TW | 202029074 A | 01-08-2020 |
| | | | US | 2021158088 A1 | 27-05-2021 |
| | | | WO | 2020155712 A1 | 06-08-2020 |
| CN 113627356 | A | 09-11-2021 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LOFFE ; SZEGEDY.** *Batch Normalization: Accelerating Deep Network Training by Reducing Internal Covariate Shift,* 2015, https://arxiv.org/abs/1502.03167
- **WU ; HE.** *Group Normalization,* 2018, https://arxiv.org/abs/1803.08494
- **BA et al.** *Layer Normalization,* 2016, https://arxiv.org/abs/1607.06450
- **ULYANOV et al.** *Instance Normalization: The Missing Ingredient for Fast Stylization,* 2016, https://arxiv.org/abs/1607.08022